# FASCICULE DE BREVET EUROPEEN

(11) **EP 2 870 015 B1**
(45) Date de publication et mention de la délivrance du brevet: **15.03.2017**
(21) Numéro de dépôt: 13720988.8
(22) Date de dépôt: 08.04.2013
(51) Int. Cl.: B60K 23/02, B60H 1/00

(54) **VÉHICULE DOTE D'UN MOTEUR A L'ARRIÈRE ET POSSÉDANT UN SYSTEM D'EMBRAYAGE PERFECTIONNÉ**
FAHRZEUG MIT EINEM HINTEREN MOTOR UND EINEM VERBESSERTEN KUPPLUNGSSYSTEM
VEHICLE HAVING A REAR MOTOR AND A IMPROVED COUPLING SYSTEM

(30) Priorité: 03.07.2012 FR 1256372
(43) Date de publication de la demande: 13.05.2015
(73) Titulaire: Renault S.A.S., 92100 Boulogne-Billancourt (FR)
(72) Inventeur: JANIER, Benoit, F-92370 Chaville (FR); BLONDEAU, Vincent, F-28000 Chartres (FR)
(86) Numéro de dépôt international: PCT/FR2013/050759
(87) Numéro de publication internationale: WO 2014/006284

(56) Documents cités:
- WO-A2-2004/042246
- JP-A- 2006 017 270

## Description

L'invention porte sur un véhicule doté d'un moteur à l'arrière et possédant un système d'embrayage perfectionné.

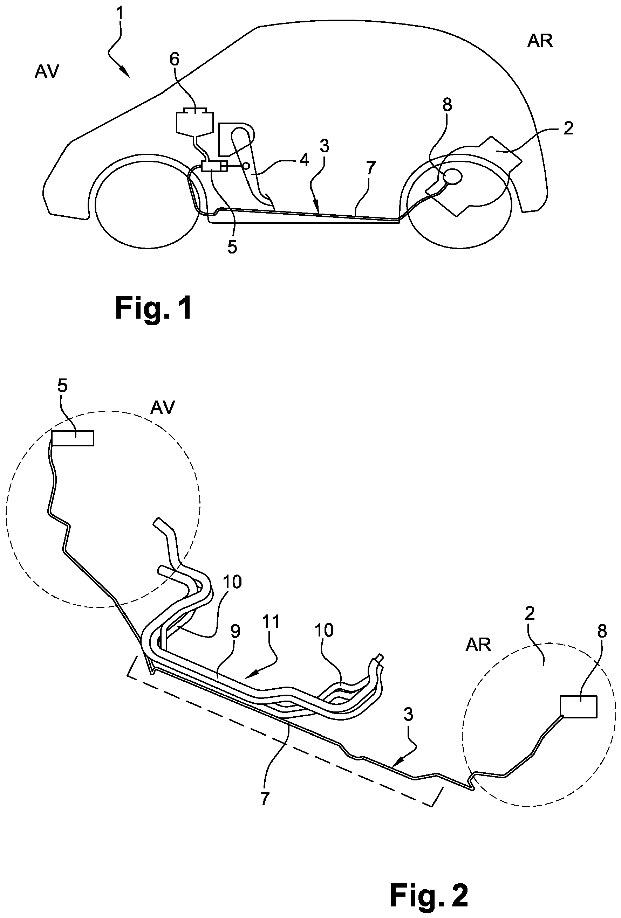

En se référant à la figure 1, un véhicule 1 équipé d'un moteur 2 à l'arrière AR, comporte un système d'embrayage 3 comprenant une pédale d'embrayage 4, un émetteur d'embrayage 5 en liaison avec un bocal 6 de liquide de frein, des conduites hydrauliques 7 et un récepteur d'embrayage 8. La pédale d'embrayage 4, l'émetteur d'embrayage 5 et le bocal 6 de liquide de frein sont placés à l'avant AV du véhicule 1, tandis que le récepteur d'embrayage 8 est situé à l'arrière AR du véhicule 1, à proximité du moteur 2. Les conduites hydrauliques 7 relient l'émetteur 5 d'embrayage au récepteur 8 d'embrayage en passant sous la caisse du véhicule, et en étant orientées selon un axe longitudinal du véhicule. Une poussée exercée sur la pédale d'embrayage 4 par le conducteur du véhicule, déclenche l'émetteur d'embrayage 5, qui engendre une pression sur le liquide de frein placé dans les conduites hydrauliques 7. Cette pression entraine alors le déplacement de ce liquide dans les conduites 7, provoquant aussitôt l'actionnement du récepteur 8 d'embrayage pour assurer la fonction d'embrayage.

JP2006017270 décrit un véhicule selon le préambule de la revendication 1.

Un problème récurrent rencontré avec ce type de véhicule, est que les conduites hydrauliques sont placées sous la caisse du véhicule, et qu'elles sont directement soumises aux conditions météorologiques extérieures. Ainsi, par temps de très grand froid, pour lesquels les températures peuvent descendre sous -25°C, ces conduites subissent un refroidissement important, susceptible d'engendrer une densification du liquide circulant dans le système d'embrayage. Il en résulte une dégradation significative du système d'embrayage, qui devient difficile à manipuler, voire totalement inopérant, en raison du fluide qui a du mal à se mouvoir dans les conduites hydrauliques.

Les véhicules selon l'invention, qui sont dotés d'un moteur à l'arrière, disposent d'un système d'embrayage performant par tout type de temps, ledit système étant configuré pour ne pas subir les conséquences d'une température externe très basse. De cette manière, un véhicule selon l'invention peut être utilisé quelles que soient les conditions météorologiques, et en particulier par temps de grand froid, en conservant un système d'embrayage opérationnel.

L'invention a pour objet un véhicule doté d'un moteur à l'arrière, ledit véhicule étant équipé d'un système d'embrayage comprenant une conduite hydraulique passant sous le véhicule et reliant un émetteur placé à l'avant dudit véhicule et un récepteur situé à l'arrière de celui-ci, la conduite hydraulique étant positionnée à proximité d'une source de chaleur préexistante dans le véhicule, de manière à être chauffée par ladite source. La principale caractéristique d'un véhicule selon l'invention, est que la source de chaleur préexistante est un tuyau de circulation d'un fluide. Autrement dit, la conduite hydraulique est agencée sous le véhicule, de manière à subir l'influence d'une source chaude déjà présente sous le véhicule, et non spécifiquement conçue pour réchauffer chacune desdites conduites. De cette manière, même par temps de grand froid, lorsque les températures sont largement négatives, le système d'embrayage d'un véhicule selon l'invention demeure pleinement opérationnel. Cette source chaude déjà existante, peut revêtir toute forme en étant constituée, par exemple, d'une zone métallique chauffée de la carrosserie, ou d'un tuyau de circulation d'un fluide. La source de chaleur préexistante résulte d'un fonctionnement normal d'un circuit de fluide ou d'un organe du véhicule, qui est extérieur au système d'embrayage. Le chauffage de la conduite hydraulique peut s'effectuer, soit par radiation, soit par conduction soit par convection. Le terme « à proximité » signifie simplement, que la conduite hydraulique est située suffisamment près de la source de chaleur pour en subir les effets thermiques, soit en ménageant un espace restreint avec cette source, soit en étant au contact avec celle-ci. Pour être efficace sur un temps assez court, de l'ordre de quelques minutes, cette source chaude doit être portée à une température supérieure ou égale à 50°C, et préférentiellement supérieure à 100°C. De façon avantageuse, le fluide est de l'eau. Durant la phase d'utilisation du véhicule, le fluide est au moins temporairement porté à une température élevée, lorsqu'il est utilisé dans sa fonction originelle. Le principe d'un véhicule selon l'invention, est d'être conçu pour pouvoir tirer bénéfice de cette source de chaleur et ainsi réchauffer la conduite hydraulique du système d'embrayage.

Selon un premier mode de réalisation préféré d'un véhicule selon l'invention, le tuyau appartient à un circuit de refroidissement du moteur, et relie un radiateur audit moteur. Plus précisément, il s'agit du tuyau qui achemine l'eau en provenance du moteur vers le radiateur, ladite eau ayant été préalablement chauffée par le moteur.

Selon un deuxième mode de réalisation préféré d'un véhicule selon l'invention, le tuyau appartient à un circuit de climatisation, et est placé en sortie d'un compresseur. En effet, le fluide est alors porté à une température élevée, et peut donc être utilisé pour réchauffer la conduite hydraulique.

De façon préférentielle, le tuyau ménage un espace avec la conduite hydraulique. Pour cette configuration, le chauffage de la conduite hydraulique s'effectue majoritairement par radiation. Le fait que le tuyau ménage un espace avec la conduite hydraulique, signifie qu'il n'est pas en contact avec celle-ci, mais qu'il est placé à une distance raisonnable, de l'ordre du centimètre, permettant un chauffage effectif et rapide de ladite conduite.

Selon un autre mode de réalisation préféré d'un véhicule selon l'invention, le tuyau est au contact de la conduite hydraulique. Pour cette configuration, le transfert de chaleur s'effectue majoritairement par conduction et permet une montée en température plus rapide de la conduite hydraulique, que celle proposée par un transfert à distance, majoritairement par radiation.

Préférentiellement, le tuyau et la conduite hydraulique sont coaxiaux. Il s'agit de la configuration la plus efficace en matière de réchauffement de la conduite hydraulique, puisque la quasi-totalité de la chaleur émise par le tuyau est utilisée pour chauffer la conduite hydraulique. Cette configuration est également peu encombrante, car le tuyau et la conduite ne sont pas placés cote à cote, mais sont confondus. Pour ce mode de réalisation, le tuyau peut, soit être placé autour de la conduite hydraulique, soit être entouré par celle-ci.

De façon préférentielle, la conduite hydraulique et le tuyau de chauffage s'étendent sous le véhicule selon un axe longitudinal du véhicule, dans la zone de chauffage. La zone de chauffage est délimitée par la longueur du tuyau, qui va directement servir à chauffer la conduite hydraulique. Cette disposition de la conduite et du tuyau de chauffage sous la caisse du véhicule, est simple et rapide à mettre en place, tout en demeurant efficace par rapport au but recherché.

Avantageusement, la conduite hydraulique est en plastique. Ce matériau est privilégié pour alléger le véhicule. Cependant, un métal tel que de l'acier, pourrait également convenir dans le cadre d'un véhicule selon l'invention.

De façon préférentielle, le tuyau de chauffage est en plastique. Ce matériau est également choisi pour diminuer la masse globale du véhicule. En alternative, un métal pourrait se substituer au plastique pour assurer le chauffage de la conduite hydraulique.

Les véhicules selon l'invention, présentent l'avantage de posséder un système d'embrayage perfectionné, sans ajout de pièces supplémentaires ni réaménagement en profondeur du véhicule. Ils ont de plus l'avantage d'utiliser une source de chaleur déjà présente dans le véhicule, évitant d'avoir à implanter une nouvelle source énergétique susceptible d'engendrer des coûts supplémentaires. Les véhicules selon l'invention, sont plus sophistiqués que les véhicules déjà existants, tout en demeurant d'un encombrement et d'un coût constants. Ils présentent enfin l'avantage de mettre en oeuvre un mécanisme de chauffage de la conduite hydraulique, qui est simple et bien maitrisé, garantissant ainsi un système d'embrayage sûr et fiable.

On donne, ci-après, une description détaillée d'un mode de réalisation préféré d'un véhicule selon l'invention, en se référant aux figures 1 et 2.
- La figure 1 est une vue simplifiée de coté d'un véhicule selon l'état de la technique, et doté d'un moteur à l'arrière,
- La figure 2 est une vue en perspective partielle, d'un tuyau de chauffage et d'une conduite hydraulique appartenant à un système d'embrayage d'un véhicule selon l'invention.

La figure 1 a déjà été décrite. Les éléments communs à la figure 1 et à la figure 2 conservent la même référence.

En se référant à la figure 2, un véhicule selon l'invention, possède un moteur 2 à l'arrière AR, un système d'embrayage 3 et un circuit de refroidissement 11 dudit moteur 2. Le système d'embrayage 3 comprend une conduite hydraulique 7 en plastique, reliant l'émetteur 5 d'embrayage situé à l'avant AV du véhicule, et le récepteur 8 d'embrayage placé à l'arrière AR dudit véhicule, à proximité du moteur 2. Le circuit de refroidissement 11 du moteur 2, comprend un premier tuyau 10 de circulation d'eau froide en plastique, allant d'un radiateur vers le moteur 2, et un deuxième tuyau 9 de circulation d'eau chaude en plastique, permettant d'acheminer l'eau, qui a été chauffée par le moteur 2 vers le radiateur. Lorsque le moteur 2 arrive à sa température de fonctionnement, environ dix minutes après son démarrage, le deuxième tuyau 9 de circulation d'eau chaude peut atteindre entre 100°C et 120°C. La conduite hydraulique 7 du système d'embrayage 3 et le deuxième tuyau 9 de circulation d'eau chaude sont agencés sous la caisse du véhicule, de sorte que la conduite hydraulique 7 s'étende selon un axe longitudinal du véhicule, et de sorte qu'au moins un segment dudit deuxième tuyau 9 s'étende également selon un axe longitudinal du véhicule, en étant placé au contact de la conduite hydraulique 7. Par ce biais, lorsque le deuxième tuyau 9 d'eau chaude est porté à une température située entre 100°C et 120°C par l'eau, qui circule à l'intérieur de celui-ci et qui a été préalablement chauffée par le moteur 2, la conduite hydraulique 7 du système d'embrayage 3 se met également à chauffer par conduction. Ainsi, par temps de grand froid, lorsque la température extérieure est inférieure à -20°C, le système d'embrayage 3 d'un véhicule selon l'invention, demeure parfaitement opérationnel, en mettant en oeuvre un liquide totalement fluide, pouvant actionner le récepteur d'embrayage 8 sans aucune difficulté.

## Revendications

1. Véhicule doté d'un moteur (2) ledit véhicule étant équipé d'un système d'embrayage (3) comprenant une conduite hydraulique (7) passant sous le véhicule et reliant un émetteur (5) placé à l'avant (AV) dudit véhicule et un récepteur (8) situé à l'arrière (AR) de celui-ci, la conduite hydraulique (7) étant positionnée à proximité d'une source de chaleur (9) préexistante dans le véhicule, de manière à être chauffée par ladite source (9), **caractérisé en ce que** le moteur est à l'arrière (AR) du véhicule et la source de chaleur préexistante est un tuyau de circulation (9) d'un fluide.

2. Véhicule selon la revendication 1, **caractérisé en ce que** le tuyau (9) appartient à un circuit de refroidissement (11) du moteur (2), et relie un radiateur audit moteur (2).

3. Véhicule selon la revendication 1, **caractérisé en ce que** le tuyau appartient à un circuit de climatisation, et est placé en sortie d'un compresseur.

4. Véhicule selon l'une quelconque des revendications 1 à 3, **caractérisé en ce que** le tuyau (9) ménage un espace avec la conduite hydraulique (7).

5. Véhicule selon l'une quelconque des revendications 1 à 3, **caractérisé en ce que** le tuyau (9) est au contact de la conduite hydraulique (7).

6. Véhicule selon l'une quelconque des revendications 1 à 3, **caractérisé en ce que** le tuyau (9) et la conduite hydraulique (7) sont coaxiaux.

7. Véhicule selon l'une quelconque des revendications 1 à 6, **caractérisé en ce que** la conduite hydraulique (7) et le tuyau (9) de chauffage s'étendent sous le véhicule selon un axe longitudinal du véhicule, dans la zone de chauffage.

8. Véhicule selon l'une quelconque des revendications 1 à 7, **caractérisé en ce que** la conduite hydraulique (7) est en plastique.

9. Véhicule selon l'une quelconque des revendications 1 à 8, **caractérisé en ce que** le tuyau (9) de chauffage est en plastique.

## Patentansprüche

1. Fahrzeug, versehen mit einem Motor (2), wobei das genannte Fahrzeug ausgestattet ist mit einem Kupplungssystem (3), umfassend eine Hydraulikleitung (7), die unter dem Fahrzeug verläuft und einen Sender (5), der vorn (AV) am Fahrzeug platziert ist, und einen Empfänger (8), der sich hinten (AR) an diesem befindet, verbindet, wobei die Hydraulikleitung (7) in der Nähe einer im Fahrzeug vorher vorhandenen Wärmequelle (9) positioniert ist, sodass sie von der genannten Quelle (9) erwärmt wird, **dadurch gekennzeichnet, dass** der Motor sich hinten (AR) am Fahrzeug befindet und die vorher vorhandene Wärmequelle ein Rohr zur Zirkulation (9) eines Mediums ist.

2. Fahrzeug nach Anspruch 1, **dadurch gekennzeichnet, dass** das Rohr (9) zu einem Kühlkreislauf (11) des Motors (2) gehört und einen Kühler mit dem genannten Motor (2) verbindet.

3. Fahrzeug nach Anspruch 1, **dadurch gekennzeichnet, dass** das Rohr zu einem Klimaanlagenkreislauf gehört und am Ausgang eines Verdichters platziert ist.

4. Fahrzeug nach einem der Ansprüche 1 bis 3, **dadurch gekennzeichnet, dass** das Rohr (9) mit der Hydraulikleitung (7) einen Raum freilässt.

5. Fahrzeug nach einem der Ansprüche 1 bis 3, **dadurch gekennzeichnet, dass** das Rohr (9) mit der Hydraulikleitung (7) in Kontakt ist.

6. Fahrzeug nach einem der Ansprüche 1 bis 3, **dadurch gekennzeichnet, dass** das Rohr (9) und die Hydraulikleitung (7) koaxial sind.

7. Fahrzeug nach einem der Ansprüche 1 bis 6, **dadurch gekennzeichnet, dass** die Hydraulikleitung (7) und das Heizrohr (9) sich unter dem Fahrzeug entlang einer Längsachse des Fahrzeugs in der Heizzone erstrecken.

8. Fahrzeug nach einem der Ansprüche 1 bis 7, **dadurch gekennzeichnet, dass** die Hydraulikleitung (7) aus Kunststoff ist.

9. Fahrzeug nach einem der Ansprüche 1 bis 8, **dadurch gekennzeichnet, dass** das Heizrohr (9) aus Kunststoff ist.

## Claims

1. Vehicle provided with an engine (2), said vehicle being equipped with a clutch system (3) comprising a hydraulic conduit (7) passing below the vehicle and connecting a master cylinder (5) placed at the front (AV) of said vehicle and a slave cylinder (8) located at the rear (AR) thereof, the hydraulic conduit (7) being positioned in the vicinity of a pre-existing heat source (9) in the vehicle, so as to be heated by said source (9), **characterized in that** the engine is at the rear (AR) of the vehicle and the pre-existing heat source is a fluid circulation pipe (9).

2. Vehicle according to Claim 1, **characterized in that** the pipe (9) forms part of a cooling circuit (11) of the engine (2) and connects a radiator to said engine (2).

3. Vehicle according to Claim 1, **characterized in that** the pipe forms part of an air-conditioning circuit and is placed at the outlet of a compressor.

4. Vehicle according to any one of Claims 1 to 3, **characterized in that** the pipe (9) forms a gap with the hydraulic conduit (7).

5. Vehicle according to any one of Claims 1 to 3, **characterized in that** the pipe (9) is in contact with the hydraulic conduit (7).

6. Vehicle according to any one of Claims 1 to 3, **characterized in that** the pipe (9) and the hydraulic conduit (7) are coaxial.

7. Vehicle according to any one of Claims 1 to 6, **characterized in that** the hydraulic conduit (7) and the heating pipe (9) extend below the vehicle along a longitudinal axis of the vehicle in the heating zone.

8. Vehicle according to any one of Claims 1 to 7, **characterized in that** the hydraulic conduit (7) is made of plastics material.

9. Vehicle according to any one of Claims 1 to 8, **characterized in that** the heating pipe (9) is made of plastics material.
